# EUROPÄISCHE PATENTANMELDUNG

(11) **EP 1 844 840 A2**
(43) Veröffentlichungstag der Anmeldung: **17.10.2007**
(21) Anmeldenummer: 07101611.7
(22) Anmeldetag: 02.02.2007
(51) Int. Cl.: B01D 50/00

(54) **Mehrstufige Vorrichtung zum Abscheiden von Flüssigkeitstropfen aus Gasen**

(30) Priorität: 12.04.2006 DE 102006017635
(71) Anmelder: MANN+HUMMEL GmbH, 71638 Ludwigsburg (DE)
(72) Erfinder: Becker, Stefan, 67346 Speyer (DE); Heikamp, Wolfgang, 67165 Waldsee (DE); Neumann, Tobias, 76773 Kuhardt (DE); Schippers, Carsten, 67354 Römerberg (DE); Stephan, Andreas, 67346 Speyer (DE); Gutekunst, Jens, 67373 Dudenhofen (DE); Biebricher, Peter, 52372 Kreuzau (DE)

(57) **Zusammenfassung**

Vorrichtung zum Abscheiden von Flüssigkeiten aus Gasen mit einem Vorabscheider, der einen Rohgasbereich von einem Vorabscheidergasbereich trennt; einem Hauptabscheider umfassend eine Koaleszierelement zur Vergrößerung der Flüssigkeitstropfen und einem Nachabscheider.

## Beschreibung

### Technisches Gebiet

Die Erfindung betrifft eine Vorrichtung zum Abscheiden von Flüssigkeitstropfen aus Gasen, insbesondere ein Luftentölelement. Abscheider für Flüssigkeitstropfen aus Gasen werden z.B. zur Abscheidung von Wasser und/oder Öl aus Luft eingesetzt. Insbesondere werden derartige Abscheider zur Entölung der Luft bei Kompressoren verwendet.

### Stand der Technik

Ein Gasstrom, der mit Flüssigkeiten in Kontakt kommt, kann mit Flüssigkeitstropfen angereichert werden. Flüssigkeitstropfen können mechanisch, z.B. beim Durchströmen des Gases durch die Flüssigkeit oder bei einer Führung des Gasstroms über einer Flüssigkeit mitgerissen werden. Bei Schraubenkompressoren, z.B., kommt Luft mit Öl in Kontakt. Das Öl wird dabei zur Abdichtung, Kühlung und zur Schmierung des Kompressors verwendet. Flüssigkeitstropfen können in einem Gasstrom auch durch Kondensation entstehen, z.B. entstehen durch Kondensation Flüssigkeitstropfen in einem Dampfstrom. Bei der Herstellung von Druckluft können Temperaturen von etwa 200 °C entstehen. Durch die Temperaturen kann ein Teil des Öls, das z.B. bei einem Schraubenkompressor zugeführt wird, verdampfen. Bei einer anschließenden Abkühlung kondensiert der Öldampf zu Tröpfchen und Nebel. Die Öltröpfchen eines Schraubenkompressors haben dabei einen Durchmesser in der Größenordnung von etwa 0,01 µm bis 100 µm.

Tropfenabscheider dienen zur Abscheidung von Flüssigkeitstropfen aus Gasen. Tropfenabscheider können eine flüssige von einer gasförmigen Phase trennen. Tropfenabscheider können zur Reinigung von Abluftströmen eingesetzt werden. Mit Tropfenabscheider können mitgeführte Flüssigkeitstropfen aus Prozessgasströmen abgeschieden werden. Durch die Abscheidung kann die Korrosion oder Erosion von Anlagenteilen oder auch das Anbacken oder Ablagerungen an Anlagenteilen reduziert werden. Tropfenabscheider werden z.B. zum Entölen von Druckluft eingesetzt.

Tropfenabscheider können als Trägheitsabscheider ausgebildet sein. Bei Trägheitsabscheidern wird die Massenträgheit der Tropfen ausgenutzt, um die Tropfen an Wandungen abzuscheiden. Trägheitsabscheider sind besonders für größere Tropfen geeignet, meist oberhalb von etwa 20 µm Tropfendurchmesser. Eine einfache Form eines Tropfenabscheiders ist eine Prallplatte. Bei einer Prallplatte wird ein mit Flüssigkeitstropfen beladener Gasstrom so gegen eine Platte geführt, dass der Gasstrom die Richtung ändert. Durch die Massenträgheit behalten in dem Gasstrom enthaltene Tropfen ihre Richtung bei, treffen auf die Platte auf und werden von dort abgeleitet. Eine andere Art der Trägheitsabscheidung macht sich Zentrifugalkräfte zu Nutze. Bei Zentrifugalabscheidern wird der Gasstrom auf einer gekrümmten Bahn geführt. Durch die Zentrifugalkräfte werden die Tropfen auf einer äußeren Bahn, mit möglichst großem Krümmungsradius, geführt. Dadurch werden die Tropfen in diesem äußeren Bereich konzentriert. Die Tropfen können dann z.B. an einer Wandung entlang des äußeren Bereichs des Gasstroms abgeschieden werden. Von der Wandung können die Tropfen abgeleitet werden. Alternativ kann auch nur Gas aus dem inneren Bereich des Gasstroms mit niedriger Tropfenkonzentration entnommen werden. Als Zentrifugalabscheider können z.B. verschiedene Arten von Zyklonen eingesetzt werden.

Tropfenabscheider können als Drainageelement ausgebildet sein. Bei einem Drainageelement wird ein mit Flüssigkeitstropfen beladener Gasstrom durch eine netzartige und/oder poröse Drainagestruktur geleitet. Als Drainagestruktur kann z.B. ein Drahtgestrick oder ein Vlies, z.B. aus Kunststoff oder Glasfaser, dienen. Tropfen durchlaufen die Drainagestruktur langsamer als der Gasstrom. Durch die Schwerkraft bewegen sich die Tropfen zum geodätisch unteren Bereich der Drainagestruktur, sammeln sich und können abgeleitet werden.

Die Trägheitsabscheidung ist umso effizienter je größer die vom Gasstrom mitgeführten Tropfen sind. Zur Tropfenvergrößerung dienen Koaleszierelemente. In Koaleszierelementen wird der Gasstrom durch eine netzartige und/oder poröse Koaleszierstruktur geleitet. Als Koaleszierstruktur kann z.B. ein Drahtgestrick oder ein Vlies, z.B. aus Kunststoff oder Glasfaser, dienen. Der Gasstrom folgt den Stromlinien. Die Tropfen können den Stromlinien nicht folgen und bleiben an Begrenzungsflächen der Koaleszierstruktur haften. Auf der Koaleszierstruktur bildet sich ein Flüssigkeitsfilm aus. Kleine Tropfen vereinigen sich zu größeren Tropfen, d.h. sie koaleszieren. Die vergrößerten Tropfen verlassen die Koaleszierstruktur. Koaleszierelemente können auch einen Drainageeffekt zeigen. Dabei bilden die Tropfen den Flüssigkeitsfilm auf der Koaleszierstruktur, bewegen sich zum geodätisch unteren Bereich und können von dort abgeleitet werden. Daher kann ein kombiniertes Koaleszier- und Drainageelement ausgebildet sein. Die größeren und damit schwereren Tropfen, die die Koaleszierstruktur verlassen, fallen im Gasstrom und können auch dadurch aus dem Gasstrom entfernt werden.

Je nach Einsatzgebiet sind dem Fachmann unterschiedliche Kombinationen von Drainage- und Koaleszierelementen sowie von Trägheitsabscheidern zur Abscheidung von Flüssigkeiten aus Gasen bekannt. Bei der Entölung von Druckluft aus Kompressoren ist das nachfolgend beschriebene System bekannt. In einem Druckbehälter ist am oberen Ende ein zylinderförmiges Strömungsleitblech eingebracht. Der vom Strömungsleitblech gebildete Zylinder ist nach unten zum Druckbehälterinneren hin offen. Zwischen das Strömungsleitblech und die Druckbehälterwand strömt die Druckluft tangential ein, wodurch eine Vorabscheidung von Öl an der Wandung des Druckbehälters erreicht wird, das abgeschiedene Öl wird in den Kompressor zurückgefördert. Die Druckluft strömt von unten in das Luftentölelement, welches sich innerhalb des vom Strömungsleitblech gebildeten Zylinders befindet. Das Luftentölelement umfasst eine oder mehrere Koaleszier- und/oder Drainagestufen, z.B. eine Koaleszierstruktur aus Borsilikat-Glasfasern und eine Drainagestruktur aus Polyestervlies. Das Vlies aus Borsilikat-Glasfasern und das Polyestervlies sind jeweils auf Stützkörper aus Metall aufgezogen. Das Luftentölelement wird von außen nach innen durchströmt. Kleine Flüssigkeitstropfen werden in der Koaleszierstruktur zu größeren Tropfen vereinigt und sinken teilweise bereits in der Koaleszierstruktur ab. Größere Tropfen, die die Koaleszierstruktur verlassen, sinken weiter in der Drainagestruktur ab und sammeln sich am Boden des Luftentölelements. Das Öl am Boden des Luftentölelements wird über eine Drainageleitung zurück zum Kompressor gefördert. Die entölte Druckluft wird vom Druckbehälter in einen Druckspeicherbehälter befördert.

Nachteilig an dem beschriebenen System zur Luftentölung, wie es z.B. bei Schraubenkompressoren eingesetzt wird, ist, dass der Druckbehälter einen größeren Innendurchmesser als das Luftentölelement haben muss, damit die Luft außerhalb des Luftentölelements zirkulieren kann. Der Druckbehälter muss damit größer und teurer gefertigt werden.

Weiterhin ist nachteilig ist, dass bei der Konstruktion des Druckbehälters die Luftentölung berücksichtigt werden muss. Der Einlass für die Druckluft vom Kompressor muss z.B. tangential gestaltet werden, um die Vorabscheidung zu realisieren. Zusätzlich ist meist ein zylindrisches Prallblech im Druckbehälter vorgesehen, in welches das Luftentölelement eingebracht ist.

Die bisherigen Luftentölelemente sind einstückig ausgebildet. Beim Austausch wird daher das gesamte Luftentölelement getauscht und ein massiver schwerer Materialverbund aus Metall, Glasfaser und Kunststoff sowie Ölresten muss entsorgt werden.

Durch den massiven Aufbau des Luftentölelements muss, wenn z.B. mehr Koaleszierfläche benötigt wird, um einen geringeren Druckverlust über der Koaleszierstufe zu realisieren, ein vollständig neues Luftentölelement konstruiert werden. Für verschiedene Anwendungen sind komplett verschiedene Luftentölelemente herzustellen.

### Offenbarung der Erfindung

Aufgabe der Erfindung ist es daher eine Vorrichtung zum Abscheiden von Flüssigkeiten aus Gasen bereit zu stellen, die eine Verkleinerung von Druckbehältern zur Luftentölung von Druckluft bei Luftverdichtern ermöglicht.

Eine weitere Aufgabe ist es, eine Vorrichtung zum Abscheiden von Flüssigkeiten aus Gasen bereit zu stellen, deren Aufbau die Luftentölung unabhängiger vom Aufbau des Druckbehälters macht.

Eine weitere Aufgabe ist es, eine Vorrichtung zum Abscheiden von Flüssigkeiten aus Gasen bereit zu stellen, deren Aufbau die Reduktion von auszutauschendem Material bei Wartungen ermöglicht.

Eine weitere Aufgabe ist es, eine Vorrichtung zum Abscheiden von Flüssigkeiten aus Gasen bereit zu stellen, deren Aufbau durch unterschiedliche Kombinationen die Realisierung unterschiedlicher Luftentölelementen für unterschiedliche Anwendungen ermöglicht.

Diese und weitere Aufgaben werden durch eine Vorrichtung zum Abscheiden von Flüssigkeiten aus Gasen, die einen Vorabscheider, der einen Rohgasbereich von einem Vorabscheidergasbereich trennt, einen Hauptabscheider umfassend eine Koaleszierelement zur Vergrößerung der Flüssigkeitstropfen, und einen Nachabscheider umfasst, gelöst.

Durch die Integration der Vorabscheidung in die Vorrichtung zum Abscheiden von Flüssigkeiten aus Gasen muss im Druckbehälter kein zylindrisches Prallblech, mit ausreichendem Platz zwischen Prallblech und Druckbehälterwandung, um das Luftentölelement angeordnet sein. Die Aufgabe der Vorabscheidung wird von der Vorrichtung zum Abscheiden von Flüssigkeiten aus Gasen übernommen. Die Vorrichtung kann z.B. von unten angeströmt werden und der Druckbehälter kann im Wesentlichen auf den Durchmesser der Vorrichtung reduziert werden. Da der Vorabscheider den Rohgasbereich von einem Vorabscheidergasbereich trennt, muss ein möglichst großer Anteil des Gases, bevor es am Hauptabscheider angelangen kann, durch den Vorabscheider hindurch. Unabhängig von der Position des Drucklufteinlasses in den Druckbehälter wird die Luft daher bereits durch den Vorabscheider teilweise entölt bevor sie am Hauptabscheider ankommt und durch die Koaleszierstruktur zum Nachabscheider geleitet wird. Besonders geeignet ist eine derartige Vorrichtung zur Entölung von Luft, z.B. bei Luftverdichtern wie Schraubenkompressoren, oder zur Entfernung von Wassertropfen aus Luft.

In einer Ausführungsform ist die Vorrichtung zum Abscheiden von Flüssigkeiten aus Gasen modular aus Vorabscheider und/oder Hauptabscheider und/oder Nachabscheider aufgebaut. Durch den modularen Aufbau können verschiedene Elemente für den Vorabscheider, den Hauptabscheider und den Nachabscheider miteinander kombiniert werden. Je nach Anwendungszweck und geforderten Leistungsdaten, wie z.B. Ölabscheiderate oder maximalem Durchfluss, kann dann die Vorrichtung hergestellt werden. Der Einsatz gleicher Elemente in unterschiedlichen Vorrichtungen kann hierbei Fertigungskosten senken.

Sind die modular ausgeführten Elemente der Vorrichtung zur Abscheidung von Flüssigkeiten aus Gasen trennbar miteinander verbunden, so kann, z.B. bei einer Wartung, nur ein Teil ausgetauscht werden. Dadurch wird Abfall reduziert. Ein Teil der Vorrichtung kann auch als Lebensdauerbauteil ausgeführt sein.

In einer Ausführungsform ist der Vorabscheider als Zyklon ausgeführt, bevorzugt als Inlinezyklon oder vereinfacht auch als Leitapparat eines Inlinezyklons, z.B. auch als Flügelrad. Bei einem Inlinezyklon wird das durchströmende Gas durch Schaufeln geleitet und dadurch auf eine gekrümmte Bahn gelenkt. Abscheidung kann als Prallabscheidung an den Schaufeln erfolgen sowie durch Zentrifugalabscheidung an Wänden nach dem Durchgang durch die Schaufeln. Ein Inlineyklon ist vorteilhaft, da er produktionstechnisch gut in einer Größe herstellbar ist, mit der er über den gesamten Querschnitt eines Druckbehälters reicht. Der Inlinezyklon kann durch die Wandungen des Druckbehälters zusammen mit einem Leitapparat ausgebildet sein. Eine ausreichende Vorabscheidung lässt sich durch einen Inlinezyklon bei gleichzeitig geringem Gewicht des Inlinezyklons erreichen. Ein Inlinezyklon, sein Leitapparat oder ein Flügelrad kann aus Kunststoff, z.B. glasfaserverstärktes Polyamid, gefertigt werden.

Das Koaleszierelement ist bevorzugt als eine Koaleszierstruktur, die auf einem Stützkörper aufgebracht ist, ausgeführt. Als Koaleszierstruktur wird bevorzugt ein Glasfaservlies aus Borsilikat-Glasfaser verwendet. Das Glasfaservlies ist auf einen Stützkörper aus Kunststoff aufgebracht, der die notwendige Druckfestigkeit liefert.

In einer Ausführungsform befindet sich in Durchströmrichtung hinter dem Koaleszierelement ein Drainageelement als Nachabscheider.

In einer Ausführungsform befindet sich in Durchströmrichtung hinter dem Koaleszierelement ein Trägheitsabscheider als Nachabscheider. Bevorzugt wird hierbei ein Zyklon eingesetzt. Für die gewünschte hohe Nachabscheiderate ist für die Luftentölung insbesondere ein Umkehrzyklon von Vorteil.

In einer Ausführungsform ist der Hauptabscheider mehrstückig aufgebaut, z.B. aus mehreren Stützrohren, die zusammensteckbar sein können. Durch den mehrstückigen Aufbau kann der Hauptabscheider mit unterschiedlicher Koaleszierfläche ausgestattet werden. Auf den Stützrohren ist die Koaleszierstruktur aufgebracht. Die Stützrohre können dichtend so zusammengesteckt werden, dass ein größeres Koaleszierelement entsteht. Dadurch kann mit mehreren, bevorzugt gleich geformten, Stützrohren ein großes Koaleszierelement aufgebaut werden. Alternativ können auch mehrere Stützrohre parallel angebracht sein.

In einer Ausführungsform sind der Vorabscheider, der Hauptabscheider und der Nachabscheider in einem Druckbehälter eingebracht. Bevorzugt unterteilt dabei der Vorabscheider den Druckbehälter entlang eines Querschnitts. Durch eine derartige Unterteilung kann der Raum des Druckbehälters optimal genutzt werden.

In einer Ausführungsform ist die Vorrichtung zur Abscheidung von Flüssigkeiten aus Gasen in den Druckbehälter eines Luftverdichters eingebaut. Vorteilhaft ist die Vorrichtung insbesondere für einen Schraubenkompressor, mit der anfallenden hohen Ölbelastung der Luft und den Anforderungen, die an ölfreie Druckluft gestellt werden.

Erfindungsgemäß ist ein Verfahren zum Abscheiden von Flüssigkeiten aus Gasen, wobei das Gas einen Vorabscheider, ein Koaleszierelement und einen Nachabscheider durchströmt. Ein solches Verfahren ist besonders vorteilhaft zur Entölung von Luft, insbesondere bei Schraubenkompressoren. Der Vorabscheider ist vorteilhafterweise als Zentrifugalabscheider, z.B. als Zyklon, insbesondere als Inlinezyklon ausgebildet. Der Nachabscheider kann ein Drainageelement umfassen oder als Trägheitsabscheider, z.B. als Zyklon insbesondere als Umkehrzyklon ausgebildet sein.

Besondere Flexibilität ergibt sich beim Aufbau der Vorrichtung zum Abscheiden von Flüssigkeiten aus Gasen in einem Baukastensystem. Ein Bausatz, bei dem z.B. beim Nachabscheider zwischen Trägheitsabscheider, z.B. einem Umkehrzyklon, und einem Drainageelement gewählt werden kann und/oder beim Vorabscheider zwischen einem Inlinezyklon, oder dem Leitapparat eines Inlinezyklons, z.B. einem Flügelrad, gewählt werden kann und/oder beim Hauptabscheider aus mehreren oder unterschiedlichen Stützkörpern gewählt werden kann. Zusätzlich kann der Bausatz auch einen Umkehrzyklon für den Vorabscheider umfassen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

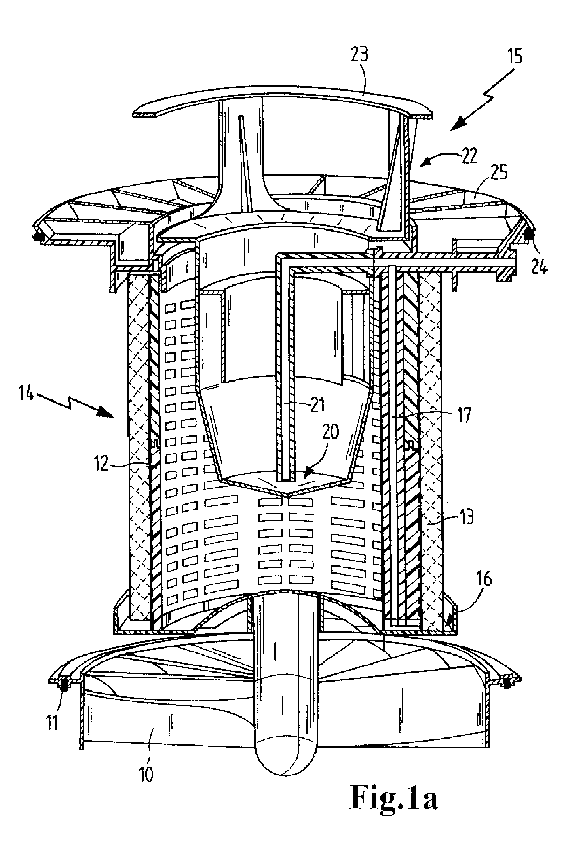

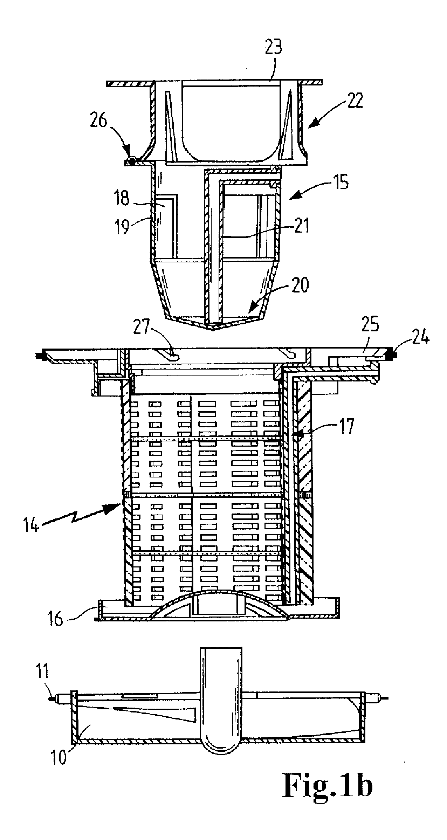

Fig. 1 a zeigt eine Vorrichtung zur Abscheidung von Flüssigkeiten aus Gasen, wie sie zur Luftentölung bei einem Luftverdichtungssystem mit Schraubenkompressor eingesetzt werden kann.

Fig. 1 b zeigt die Vorrichtung aus Fig. 1 a, wobei die Vorrichtung in mehrere Bestandteile zerlegt ist.

Fig. 2 zeigt eine alternative Vorrichtung zur Abscheidung von Flüssigkeiten aus Gasen, wie sie zur Luftentölung bei einem Luftverdichtungssystem mit Schraubenkompressor eingesetzt werden kann, mit aus mehreren Stützrohren zusammensetzbarem Hauptabscheider.

Fig. 3 zeigt eine weitere bevorzugte Ausführungsform für ein Luftentölelement.

### Ausführungsform(en) der Erfindung

Bei einem Luftverdichtungssystem mit Schraubenkompressor werden bei der Drucklufterzeugung im Schraubenkompressor etwa 5 kg Öl / m³ Luft zugeführt. Das Öl dient sowohl zur Schmierung des Kompressors wie zur Abdichtung. Bei einem herkömmlichen Luftverdichtungssystem, das zur Bereitstellung so genannter ölfreier Druckluft dient, d.h. das Druckluft mit Ölgehalten von etwa 1 bis 3 mg/m³ Luft bereitstellen soll, muss die ölhaltige Druckluft entölt werden. In einem herkömmlichen Luftverdichtungssystem findet eine Vorabscheidung in einem Druckbehälter statt. Die Vorabscheidung wird durch tangentiales Einströmen der ölhaltigen Luft in den Druckbehälter erreicht. Die Luft strömt dabei um einen zylinderförmigen Einsatz im Druckbehälter herum in dem ein Luftentölelement zur weiteren Abscheidung des Öls eingebracht ist. Durch den tangentialen Eintritt und das Abscheiden von Öl an der Druckbehälterwand als Prallplatte, kann im Druckbehälter eine Reduktion der Ölkonzentration in der Druckluft, die am Luftentölelement ankommt, auf etwa 2 bis 5 g/m³ Luft erreicht werden. Das abgeschiedene Öl wird dem Kompressor wieder zugeführt. In der in Fig. 1 a und b dargestellten Ausführungsform der Erfindung kann die ölhaltige Luft nun beliebig in den Druckbehälter einströmen. Die ölhaltige Luft durchströmt im Druckbehälter von unten den Leitapparat 10 eines Inlinezyklons, der als Vorabscheider dient. Der Leitapparat 10 kann mit einer Dichtung 11 gegen die Druckbehälterwand abgedichtet werden und trennt so den Druckbehälter auf in einen Rohluftbereich und einen Vorabscheiderbereich. Die Dichtung 11 ist derart ausgeführt, dass Öl an der Druckbehälterwand entlang herablaufen kann und durch einen schmalen Spalt oder Öffnungen an der Dichtung aus dem Vorabscheiderbereich in den Rohluftbereich zurücklaufen kann. Der Spalt oder die Öffnungen sind dabei so auszuführen, dass möglichst wenig Luft durch den Spalt oder die Öffnungen dringt und der Hauptanteil der Luft durch den Vorabscheider vom Rohluftbereich in den Vorabscheiderbereich gelangt. Alternativ kann das Öl auch durch den Leitapparat 10 zurückfließen. Der Leitapparat 10 bildet dabei mit der Druckbehälterinnenwand eine Art Inlinezyklon. Durch einen derart ausgeführten Vorabscheider kann die Ölkonzentration auf unter 0,5 g/m³ Luft reduziert werden. Das durch den Vorabscheider abgeschiedene Öl läuft über die Leitbleche und über die Druckbehälterwandung zurück in den Ölsumpf im geodätisch unteren Bereich des Druckbehälters, von hier kann es dem Kompressor wieder zugeführt werden. Durch die im Vergleich mit herkömmlichen Systemen zur Luftentölung niedrigere Ölkonzentration ergeben sich Freiheiten für die Konstruktion des Hauptabscheiders 14 und/oder des Nachabscheiders 15, da diese geringere Abscheideraten erreichen müssen. Die Luft durchströmt vom Vorabscheidebereich einen Hauptabscheider, der in der Ausführungsform von Fig. 1 a als ein auf ein Stützrohr 12 in mehreren Lagen aufgebrachtes Vlies 13 aus Borsilikat-Glasfaser als Koaleszierstruktur ausgeführt ist. Beim Durchströmen des Vlieses 13 verbinden sich kleinere Tropfen zu größeren Tropfen, gleichzeitig sinken die Tropfen in der Koaleszierstruktrur ab. Die absinkenden Tropfen sammeln sich in einer ersten Mulde 16 zusammen mit großen Tropfen, die aus der Koaleszierstruktur herausdringen und im Inneren des Stützrohrs 12 im Gasstrom geodätisch nach unten fallen. Durch eine erste Drainageleitung 17 wird das abgeschiedene Öl aus der Mulde 16 zurückgeführt. Der Luftstrom, der aus dem Hauptabscheider 14 zum Nachabscheider 15 strömt, enthält nun im Wesentlichen größere Öltropfen, die im Nachabscheider 15 abgeschieden werden können. In der Ausführungsform in Fig. 1 a und b dient ein Umkehrzyklon 18 zur Nachabscheidung. Im Umkehrzyklon wird die Luft in Rotation versetzt, so dass die Öltropfen an der Wandung 19 des Umkehrzyklons 18 abgeschieden werden. Die Öltropfen gleiten an der Wandung 19 des Umkehrzyklons 18 in die zweite Mulde 20 und werden von der zweiten Mulde 20 über eine zweite Drainageleitung 21 wieder zum Kompressor zurückgeführt. Die zweite Drainageleitung 21 ist in der in Fig. 1 a und b dargestellten Ausführungsform mit der ersten Drainageleitung 17 gekoppelt, sie könnte jedoch auch separat verlaufen. Der Nachabscheider 15 umfasst einen Abstandshalter 22, an dessen oberem Ende ein Befestigungsring angebracht ist. Die Vorrichtung zur Abscheidung von Flüssigkeiten aus Gasen kann mit diesem Befestigungsring 23 im Druckbehälter befestigt werden. Eine am oberen Ende des Hauptabscheiders 14 angebrachte Trennplatte 25 dichtet mit der Dichtung 24 gegen den Druckbehälter ab. Die Trennplatte 25 trennt den Vorabscheidergasbereich von der entölten Luft, die den Nachabscheider 15 verlässt.

In Fig. 1 b ist der modulartige Aufbau der Vorrichtung zur Abscheidung von Flüssigkeiten aus Gasen dargestellt. Der als Inlinezyklon 10 ausgeführte Vorabscheider 10, der Hauptabscheider 14 und der Nachabscheider 15 sind als Baugruppen ausgeführt. Die Baugruppen können z.B. mit einer Bajonettverbindung zusammengefügt werden. Zapfen 26 und Aufnahmen 27 für die Zapfen 26 sind für die Koppelung des Nachabscheiders 15 an den Hauptabscheider 14 dargestellt. Andere Steck-, Rast- oder Schraubverbindungen sind natürlich auch denkbar. Ebenso könnten die Baugruppen miteinander verschweißt werden. Die einzelnen Baugruppen der Fig. 1 b können alle aus Kunststoff, insbesondere aus glasfaserverstärktem Polyamid gefertigt sein. Benötigte Dichtungen 11, 26 oder weitere Dichtungen können angespritzt werden oder als O-Ring-Dichtung in Nuten eingebracht werden. Durch den modulartigen Aufbau können verschiedene Elemente für eine Baugruppe miteinander ausgetauscht werden. So kann z.B. statt des Umkehrzyklons 18 ein Spiralzyklon oder ein zweiter Inlinezyklon verwendet werden. Unterschiedlich hohe Hauptabscheider mit unterschiedlich großen Flächen der Koaleszierstruktur können eingesetzt werden. Sind die Baugruppen Vorabscheider, Hauptabscheider und Nachabscheider trennbar miteinander verbunden, so kann bei einer Wartung auch nur eine einzelne Baugruppe ausgetauscht werden. Z.B. könnten der Inlinezyklon 10 und der Nachabscheider 15 als Lebensdauerbauelement ausgeführt sein und nur der Hauptabscheider 14 mit dem Vlies 13 wird ausgewechselt.

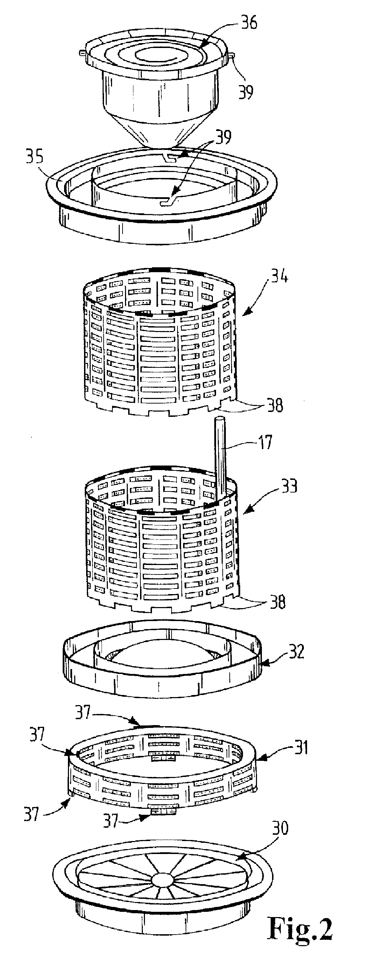

In Fig. 2 ist eine Ausführungsform der Vorrichtung zur Abscheidung von Flüssigkeiten aus Gasen dargestellt mit aus mehreren Stützrohren zusammensetzbarem Hauptabscheider zerlegt in ihre Einzelteile. In der Ausführungsform der Fig. 2 dient ein Inlinezyklon 30 als Vorabscheider. Der Inlinezyklon 30 kann über ein Distanzstück 31 mit Rastverbindungen 37 mit einer Ölauffangmulde 32 trennbar verbunden werden. Die Ölauffangmulde 32 kann mit einem ersten Stützrohr 33 durch Steckverbindungen 38 verbunden werden. Ein zweites Stützrohr 34, das gleich aufgebaut ist wie das erste Stützrohr 33, kann auf das erste Stützrohr 33 mit Steckverbindungen 38 gesteckt werden. Weitere zusätzliche nicht dargestellte Stützrohre könnten hinzugefügt werden. In der schematischen Darstellung der Fig. 2 ist Vlies, welches das Stützrohr umgibt, nicht dargestellt. Wiederum durch eine Steckverbindung kann das Abschlussstück 35 auf das zweite Stützrohr 34 gesteckt werden. In das Abschlussstück 35 kann als Nachabscheider ein Spiralzyklon 36 eingesetzt werden. In der Ausführungsform der Fig. 2 wird der Spiralzyklon 36 mit einer Bajonettverbindung 39 am Abschlussstück 35 trennbar montiert. Alternativ zu einem durch mehrere Stützrohre 33, 34 verlängerten Stützrohr können auch mehrere parallele Stützrohre verwendet werden.

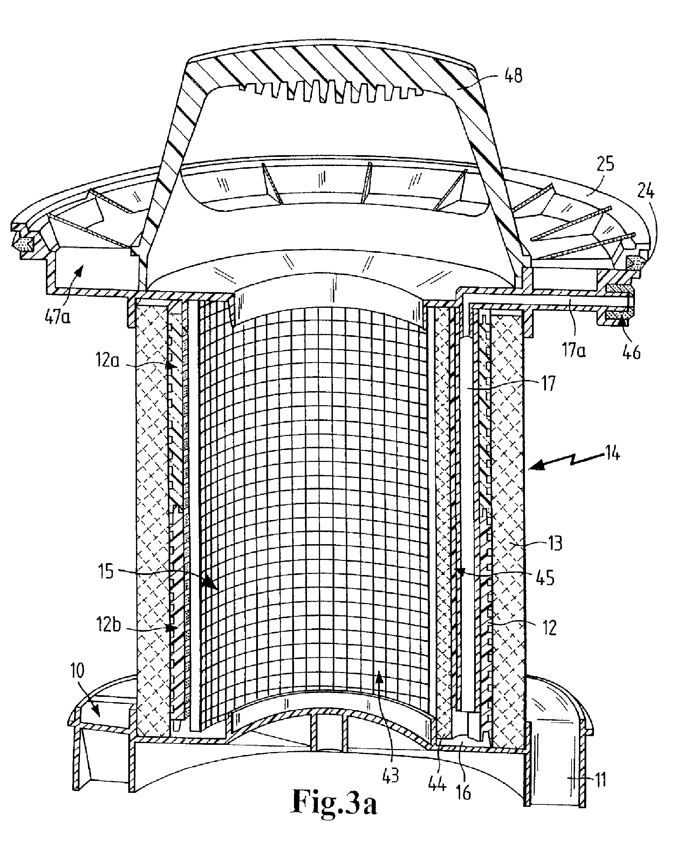

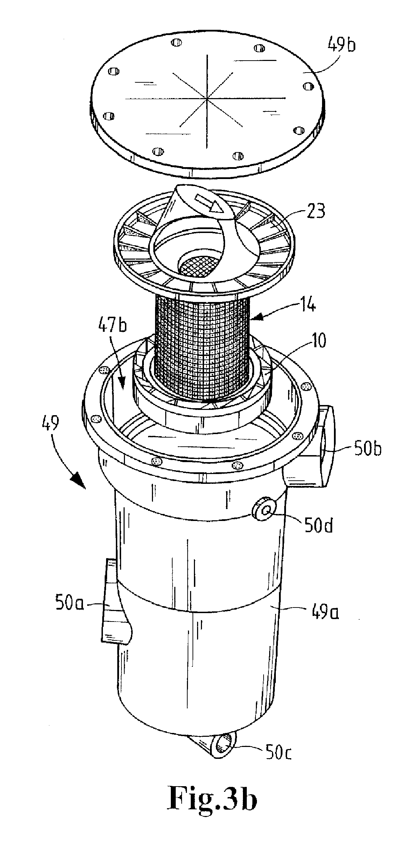

Das Luftentölelement der Fig. 3 a ist eine bevorzugte Ausführungsform der Erfindung. Ein Flügelrad 10 aus Kunststoff, z.B. aus glasfaserverstärktem Polyamid, dient als Vorabscheider. Das Flügelrad 10 wirkt einmal ähnlich einer Prallplatte als Trägheitsabscheider, andererseits wird durch das Flügelrad 10 die Luftströmung auf eine gekrümmte Bahn gelenkt und Öl dadurch an der Druckbehälterinnenwand abgeschieden. Der Hauptabscheider 14 ist wie in Fig. 1 a und b als Koaleszierelement ausgeführt. Ein Vlies 13 ist auf einen ersten Stützkörper 12 aufgewickelt und verklebt. Der erste Stützkörper 2 ist aus zwei Modulen 12 a und 12 b zusammengesetzt, die beiden Module 12 a und 12 b können identisch sein. Der Nachabscheider 15 ist in der Ausführungsform der Fig. 3 als Drainageelement ausgebildet. Um einen zweiten Stützkörper 43 ist ein Drainagevlies 44, z.B. aus Polyamid oder aus Glasfaser, gewickelt. In einer Mulde 16 sammelt sich Öl, das vom Hauptabscheider 14 und vom Nachabscheider 15 abgeschieden wird. Am ersten Stützrohr 12 ist eine Aufnahme 45 für eine Drainageleitung 17 angebracht. Die Aufnahme 45 ist als an jedem Modul 12 a und b des Stützkörpers 12 angespritzter Rohrabschnitt ausgeführt. Die Drainageleitung 17 ist in die Aufnahme 45 eingeschoben. Die Drainageleitung 17 ist mit einem Drainageleitungsabschnitt 17 a verbunden. Der Drainageleitungsabschnitt 17 a wird beim Einsetzen des Luftentölelements in den Druckbehälter mit einer Dichtung 46 an einen Druckbehälterausgang angekoppelt. Der erste Stützkörper 12 und der zweite Stützkörper 43 sind am geodätisch oberen Ende mit einer Endscheibe, die als Trennplatte 25 den Druckbehälter aufteilt, verbunden. Die Trennplatte 25 dichtet mit einem Dichtungsring 24 am Druckbehälter ab. An der Trennplatte 25 ist ein Griff 48 angebracht, dieser kann abnehmbar sein oder in einer anderen Ausgestaltung der Erfindung, im eingebauten Zustand des Luftentölelements, im Druckbehälter das Luftentölelement fixieren. Die konisch ausgeformte Positioniermarke 47 a lässt sich in ein korrespondierend geformtes Gegenstück am Druckbehälter einschieben. Durch die konische Ausformung der Positioniermarke 47 a ist diese selbstfindend und das Luftentölelement rutscht bei nicht vollständig richtiger Positionierung beim Einbau automatisch in die richtige Position. Die Positioniermarke 47 a kann auch so ausgestaltet werden, dass sie eine Verspannung im Luftentölelement aufbaut, durch die die Dichtung 46 axial verspannt wird.

Fig. 3 b zeigt den Einbau des Luftentölelements aus Fig. 3 a in einen Druckbehälter 49. Der Druckbehälter 49 umfasst einen Deckel 49 b und einen Korpus 49 a. Bevorzugt ist der Druckbehälter aus Stahl, z.B. Edelstahl, gefertigt. Der Druckbehälter 49 umfasst Lufteinlässe 50 a und Luftauslässe 50 b. Der Druckbehälter umfasst an seinem geodätisch unteren Ende einen Ölauslass und einen weiteren Ölauslass 50 d, der an die Drainageleitung 17 koppelt. Eine zu einer Positioniermarke 49 a korrespondierende Aussparung 47 b am Druckbehälter 49 lässt den Einbau des Luftentölelements nur in einer Position zu. Das Luftentölelement kann in den Druckbehälter 49 a eingesetzt werden und der Deckel 49 b kann auf den Korpus 49 a aufgeschraubt werden, ohne dass hierfür Leitungen am Druckbehälter 49 geöffnet werden müssen.

## Patentansprüche

1. Vorrichtung zum Abscheiden von Flüssigkeiten aus Gasen umfassend
i.) einen Vorabscheider, der einen Rohgasbereich von einem Vorabscheidergasbereich trennt;
ii.) einen Hauptabscheider umfassend ein Koaleszierelement zur Vergrößerung der Flüssigkeitstropfen;
iii.) einen Nachabscheider.

2. Vorrichtung nach Anspruch 1, wobei der Vorabscheider aus Kunststoff gefertigt ist.

3. Vorrichtung nach einem der vorhergehenden Ansprüche, wobei der Vorabscheider unabhängig von einer Anströmrichtung an den Vorabscheider funktioniert.

4. Vorrichtung nach einem der vorhergehenden Ansprüche zum Abscheiden von Öl und/oder Wasser aus Luft.

5. Vorrichtung nach einem der vorhergehenden Ansprüche für einen Luftverdichter, insbesondere einen Schraubenkompressor.

6. Vorrichtung nach einem der vorhergehenden Ansprüche, wobei die Vorrichtung aus Vorabscheider, Hauptabscheider und Nachabscheider modular aufgebaut ist.

7. Vorrichtung nach Anspruch 6, wobei der Vorabscheider mit dem Hauptabscheider und/oder der Hauptabscheider mit dem Nachabscheider trennbar verbunden sind.

8. Vorrichtung nach einem der vorhergehenden Ansprüche, wobei der Vorabscheider einen Prallabscheider, einen Leitapparat oder einen Zentrifugalabscheider, insbesondere einen Zyklon oder ein Flügelrad, umfasst.

9. Vorrichtung nach einem der vorhergehenden Ansprüche, wobei das Koaleszierelement eine um ein Stützrohr herum angebrachte Koaleszierstruktur umfasst.

10. Vorrichtung nach einem der vorhergehenden Ansprüche, wobei der Nachabscheider ein Drainageelement umfasst.

11. Vorrichtung nach einem der vorhergehenden Ansprüche, wobei der Nachabscheider einen Trägheitsabscheider, insbesondere einen Zentrifugalabscheider, z.B. einen Zyklon, umfasst.

12. Vorrichtung nach Anspruch 11, wobei der Trägheitsabscheider ein Umkehrzyklon ist.

13. Vorrichtung nach einem der Ansprüche 7 bis 12, wobei der Hauptabscheider mehrstückig aufgebaut ist.

14. Vorrichtung nach Anspruch 13, wobei die mehreren Stücke mehrere Stützrohre umfassen.

15. Vorrichtung nach Anspruch 14, wobei die mehreren Stützrohre zusammensteckbar sind.

16. Vorrichtung nach einem der vorhergehenden Ansprüche, wobei der Vorabscheider, der Hauptabscheider und der Nachabscheider in einem Druckbehälter eingebracht sind.

17. Vorrichtung nach Anspruch 16, wobei der Vorabscheider den Druckbehälter unterteilt.

18. Luftverdichtungsanlage umfassend eine Vorrichtung zum Abscheiden von Flüssigkeiten aus Gasen nach einem der Ansprüche 1 bis 17.

19. Verfahren zum Abscheiden von Flüssigkeiten aus Gasen, wobei das Gas einen Vorabscheider, ein Koaleszierelement und einen Nachabscheider durchströmt.

20. Verfahren nach Anspruch 19 zur Entölung von Luft aus Schraubenkompressoren.

21. Verfahren nach einem der Ansprüche 19 oder 20, wobei der Vorabscheider einen Zentrifugalabscheider, insbesondere einen Zyklon, einen Leitapparat oder ein Flügelrad, umfasst.

22. Verfahren nach einem der Ansprüche 19 bis 21, wobei der Nachabscheider ein Drainageelement umfasst.

23. Verfahren nach einem der Ansprüche 19 bis 21, wobei der Nachabscheider einen Trägheitsabscheider, insbesondere einen Zentrifugalabscheider, z.B. einen Zyklon, umfasst.

24. Bausatz für den Zusammenbau einer Vorrichtung zum Abscheiden von Flüssigkeiten aus Gasen umfassend
i.) einen Vorabscheider;
ii.) einen Hauptabscheider mit einem Koaleszierelement; und
iii.) einen Nachabscheider, wobei beim Nachabscheider mindestens zwischen einem Drainageelement und einem Trägheitsabscheider gewählt werden kann.

25. Bausatz nach Anspruch 24, wobei der Vorabscheider, der Hauptabscheider und der Nachabscheider trennbar zusammengesetzt werden können.

26. Bausatz nach einem der Ansprüche 24 oder 25, wobei für den Vorabscheider mindestens zwischen zwei Arten von Vorabscheidern aus der Gruppe Flügelrad, Leitapparat, Inlinezyklon und Umkehrzyklon gewählt werden kann.

27. Bausatz nach einem der Ansprüche 24 bis 26, wobei der Hauptabscheider aus mehreren Mittelrohrstücken zusammengefügt werden kann.
